# EUROPEAN PATENT APPLICATION

(11) **EP 1 506 947 A2**
(43) Date of publication of application: **16.02.2005**
(21) Application number: 04020910.8
(22) Date of filing: 07.09.2000
(51) Int. Cl.: C04B 35/14

(54) **Amorphous, near net-shaped, pen-pore SiO2-molded body**

(30) Priority: 09.09.1999 DE 19943103
(62) Divisional of application: 00965941.8
(71) Applicant: Wacker-Chemie GmbH, 81737 München (DE)
(72) Inventor: Schwertfeger, Fritz, Dr., 84489 Burghausen (DE); Weis, Johann, Prof., 82054 Sauerlach (DE); Ritter, Peter, 87471 Durach (DE); Molter, Achim, 87493 Lauben (DE); Schweren, Wolfgang, 87437 Kempten (DE); Frey, Volker, Dr., 84489 Burghausen (DE); Scherm, Hans-Peter, Dr., 84547 Emmerting (DE)
(74) Representative: Potten, Holger

(57) **Zusammenfassung**

Die Erfindung betrifft einen amorphen, offenporigen, endkonturnahen SiO₂-Formkörper dadurch gekennzeichnet, daß er zu mindestens 64 Vol.% aus runden SiO₂-Partikeln, die eine bimodale Korngrößenverteilung aufweisen, besteht und ein Porenvolumen (bestimmt mittels Quecksilberporosimetrie) von 1 ml/g bis 0,01 ml/g hat
und Poren mit einem Porendurchmesser von 1 bis 10 µm besitzt, die bis 1000°C sinterstabil sind oder
Poren mit einer bimodalen Porendurchmesserverteilung hat, wobei ein Maximum der Porendurchmesser im Bereich von 0,01 bis 0,05 µm liegt und ein zweites Maximum der Porendurchmesser im Bereich von 1 bis 5 µm liegt

## Description

Die Erfindung betrifft einen amorphen, offenporigen, endkonturnahen SiO₂-Formkörper.

Poröse, amorphe SiO₂-Formkörper werden auf vielen technischen Gebieten benutzt. Als Beispiele seien Filtermaterialien, Wärmedämmmaterialien oder Hitzeschilder genannt.

Ferner können aus amorphen, porösen SiO₂-Formkörpern mittels Sinterung und/oder Schmelzen Quarzgüter aller Art hergestellt werden. Hochreine poröse SiO₂-Formkörper können dabei z.B. als "preform" für Glasfasern oder Lichtleitfasern dienen. Darüber hinaus können auf diesem Wege auch Tiegel für das Ziehen von Siliziumeinkristallen hergestellt werden.

Unabhängig von der Verwendung der porösen Formkörper ist man immer bestrebt, einen möglichst endkonturnahen Formkörper herzustellen. Das heißt, im Laufe der Herstellung des Formkörpers darf nur wenig bis überhaupt kein Schrumpf auftreten.

Poröse SiO₂-Formkörper können prinzipiell mittels Verpressen entsprechender SiO₂-Pulver, oder über einen naßchemischen Prozeß hergestellt werden.

Bei den aus der Keramik bekannten Verfahren zum Verpressen von Pulvern z.B. kalt oder heiß isostatischen Preßverfahren müssen in der Regel Bindemittel organischer Natur zugesetzt werden, um einen stabilen Grünkörper zu erhalten. Diese Bindemittel müssen in einem späteren Schritt wieder herausgelöst oder verbrannt werden. Das ist technisch aufwendig, teuer und führt zu ungewollten Verunreinigungen, die es insbesondere bei der Herstellung von Tiegeln zum Ziehen von Siliziumeinkristallen unbedingt zu vermeiden gilt.

Der bevorzugte Weg zur Darstellung von porösen SiO₂-Formkörpern ist daher der naßchemische Weg. Ein aus der Literatur bekanntes Verfahren ist der Sol-Gel Prozeß. Dabei geht man im allgemeinen von in Lösemitteln gelösten siliziumhaltigen Monomeren aus (Sol), die mittels Hydrolyse und/oder Polykondensation ein nanoporöses dreidimensionales SiO₂ Netzwerk (Gel) bilden. Durch unterkritische oder überkritische Trocknung wird dann der poröse Formkörper erhalten. Neben den zumeist teuren Ausgangssubstanzen können dabei nur Gele mit einem Feststoffgehalt von etwa 10-20 Gew.% erhalten werden. Beim unterkritischen Trocknen kommt es daher zu einem extrem hohen Schrumpf, womit endkonturnahe Formkörper nicht reproduzierbar hergestellt werden können. Wird eine überkritische Trocknung durchgeführt, so schrumpft der Formkörper zwar nicht, er hat dann aber nur einen Feststoffgehalt von 10-20 Gew.%.

Ein Weg um SiO₂-Formkörper mit einem höheren Feststoffgehalt zu erhalten, ist in EP 705797 beschrieben. Hier werden dem Sol zusätzlich hochdisperse Kieselsäureteilchen (sog. Fumed Silica) zugesetzt. Damit kann ein Feststoffgehalt von etwa 40 Gew.% erhalten werden. Jedoch ist die Herstellung des Sols weiterhin teuer und die Trocknung aufwendig.

Ein weiteres Verfahren ist in EP 318100 beschrieben. Dabei wird eine Dispersion aus hochdisperser Kieselsäure (fumed Silica), mit Teilchen im Größenbereich von 10-500 nm in Wasser hergestellt. Nach dem Formen und Erstarren der Dispersion wird mittels Trocknung der entsprechende Formkörper erhalten. Dabei erhält man Feststoffgehalte von bis zu 60 Gew.%.

EP 653381 und DE-OS 2218766 offenbaren ein Schlickergußverfahren bei dem eine Dispersion aus Quarzglasteilchen mit einer Partikelgröße von 0,45 bis 70 µm, vorzugsweise von 1-10 µm, in Wasser hergestellt wird. Der erreichbare Feststoffanteil der Dispersion liegt zwischen 78 und 79 Gew.%. Die Dispersion wird anschließend in einer porösen Form durch langsamen Wasserentzug verfestigt und nach Entformung getrocknet. Durch dieses Verfahren sind zwar Formkörper mit recht hohen Feststoffgehalten herstellbar, jedoch ist das Schlickergußverfahren aufgrund des diffusionsabhängigen Wasserentzuges sehr zeitintensiv und nur für dünnwandige Formteile anwendbar. Ferner führt die Verfestigung durch Wasserentzug mittels poröser Formen zu einem unerwünschten Dichtegradienten innerhalb des Formkörpers, was beim späteren Sintern sowohl unterschiedliche Sintertemperaturen, Sinterzeiten als auch Dichteunterschiede bewirkt.

Will man auf ein aufwendiges Schlickergußverfahren verzichten und trotzdem möglichst endkonturnahe Formkörper herstellen, so müssen Dispersionen mit extrem hohen Feststoffanteil verwirklicht werden. Dies führt in der Praxis zu großen Problemen, da dispergierte SiO₂ Partikel einen stark thixotropen Effekt verursachen. Während des Dispergierens tritt eine dilatante Phase auf. Das macht sich dadurch bemerkbar, daß die Viskosität der Suspension mit zunehmender Scherung ansteigt. Um eine noch gut gießfähige, jedoch hochgefüllte Dispersion zu erreichen, bedarf es eines aufwendigen Verfahrens mit einem Wechsel von geringer Scherung während des Einrührens und hoher Scherung während des Homogenisierens. Wegen der sehr raschen Verfestigung einer solch hochgefüllten Suspension bereitet es auch Schwierigkeiten, eine homogene Formung der Dispersion zu verwirklichen.

Aus GB-B-2329893 ist eine Zusammensetzung zur Herstellung von Silica Glas bekannt, die pyrogene Kieselsäure mit einem mittleren Partikeldurchmesser von 5x10⁻³ bis 1x10⁻¹µm und einer spezifischen Oberfläche von 50 bis 400m²/g sowie hitzebehandelte Kieselsäure,als Agglomerat aus einer pyrogenen Kieselsäure, mit einem mittleren Durchmesser von 2 bis 15 µm und einer geringeren spezifischen Oberfläche als die pyrogene Kieselsäure sowie, Plastifizierer (z.B. Tetramethylammoniumhydroxid), Dispergiermittel (z. B. Polyethyloxazolin, Glycerin) und Bindemittel (z.B. Methylformiat) enthält. Eine solche Zusammensetzung ist zur Herstellung hochreiner Sinterkörper aufgrund seines Gehalts an unterschiedlichen organischen und/oder anorganischen Zusätzen gänzlich ungeeignet. In dieser Schrift werden in den offenbarten Zusammensetzungen und daraus resultierenden Grünkörpern zudem nur Füllgrade von bis zu 51Gew.% Feststoffanteil erreicht.

Aus JP 5294610 ist ein Verfahren zur Herstellung von amorphen SiO₂ Formkörpern bekannt, die einen Füllgrad von bis zu 80Gew.% aufweisen. Dabei werden SiO₂-Partikel mit einem mittleren Partikeldurchmesser von 0,1 bis 100µm verwendet. Um überhaupt solch hohe Füllgrade erreichen zu können, müssen die Partikel in basisches Wasser (pH >10, z. B. mittels TMAH) mittels großer und langwieriger Scherbeanspruchung (z. B. Kugelmühle) dispergiert werden. Aufgrund der unvermeidlichen Verunreinigungen durch die Verwendung von Basen und dem Abrieb (abrasives Verhalten der SiO₂-Partikel) während der langen und intensiven Scherung ist eine solche Zusammensetzung zur Herstellung hochreiner SiO₂ Formkörper gänzlich ungeeignet.

Aus US-A-4,929,579 ist ein Verfahren bekannt, durch das Feuerfestartikel aus Kieselsäure unter Verwendung einer Dispersion hergestellt werden, wobei diese Dispersion amorphe SiO₂-Partikel mit trimodaler Korngrößenverteilung enthält. Eine solche Dispersion ist nur sehr aufwändig herzustellen. Zudem ergeben sich aufgrund des Anteils an sehr großen Partikeln (mittlerer Partikeldurchmesser >300µm) Inhomogenitäten und Sedimentationserscheinungen in der Dispersion. Dadurch kommt es zu Dichteschwankungen innerhalb der Dispersion bzw. der Formkörper, was bei anschließenden Formgebungsprozessen und Sinterungen zu erheblichen Schwierigkeiten bezüglich Formgenauigkeit und i-sotroper Schwindung führt.

Eine Aufgabe der vorliegenden Erfindung war es, eine mit SiO₂-Partikeln hochgefüllte, homogene und sehr gut gießfähige Dispersion zur Verfügung zu stellen, die nicht die aus dem Stand der Technik bekannten Nachteile aufweist.

Diese Aufgabe wird durch eine homogene Dispersion von amorphen SiO₂-Partikeln in einem Dispersionsmittel gelöst, dadurch gekennzeichnet, daß die Dispersion einen Füllgrad von mindestens 80 Gew.% an amorphen SiO₂-Partikeln aufweist und die amorphen SiO₂-Partikel eine bimodale Korngrößenverteilung haben.

Vorzugsweise weist die Dispersion einen Füllgrad von mindestens 83 Gew.% an amorphen SiO₂-Partikeln auf.

Besonders bevorzugt weist die Dispersion einen Füllgrad von mindestens 86 Gew.% an amorphen SiO₂-Partikeln auf.

Die Obergrenze des Füllgrades an amorphen SiO₂-Partikeln liegt vorzugsweise bei etwa 95 Gew.%, wenn als Dispersionsmittel Wasser verwendet wird, bzw. bei einem entsprechenden Wert, wenn ein Dispersionsmittel einer anderen Dichte verwendet wird.

Als Dispersionsmittel können polare oder unpolare organische Lösungsmittel, wie z.B. Alkohole, Ether, Ester, organische Säuren, gesättigte oder ungesättigte Kohlenwasserstoffe, oder Wasser oder deren Mischungen vorliegen.

Vorzugsweise liegen Alkohole wie Methanol, Ethanol, Propanol, oder Azeton oder Wasser oder deren Mischungen vor. Besonders bevorzugt liegen Azeton und Wasser oder deren Mischungen vor, ganz besonders bevorzugt liegt Wasser vor.

Besonders bevorzugt werden die oben beschriebenen Dispersionsmittel in hochreiner Form verwendet, wie sie z.B. nach literaturbekannten Verfahren erhalten werden können oder käuflich erhältlich sind.

Bei der Verwendung von Wasser wird vorzugsweise speziell gereinigtes Wasser verwendet, das einen Widerstand von ≥ 18 Mega-Ohm*cm aufweist.

Vorzugsweise wird dem Wasser eine mineralische Säure, wie z.B. HCl, HF, H₃PO₄,H₂SO₄ oder Kieselsäure oder ionogene Zusatzstoffe wie z.B. Fluorsalze zugesetzt. Besonders bevorzugt ist dabei der Zusatz von HCl oder HF, ganz besonders bevorzugt HF.
Es können auch Mischungen der genannten Verbindungen eingesetzt werden. Dabei sollte in der Dispersion ein pH-Wert von 2-7, vorzugsweise 3-5 eingestellt werden.

Alternativ und ebenfalls bevorzugt kann dem Wasser eine mineralische Base zugesetzt werden, wie z.B. NH₃, NaOH oder KOH. Besonders bevorzugt ist NH₃ und NaOH, ganz besonders bevorzugt NH₃. Es können aber auch Mischungen der genannten Verbindungen eingesetzt werden. Dabei sollte ein pH-Wert von 7-11, vorzugsweise 9-10 eingestellt werden.

Die Herabsetzung bzw. Erhöhung des pH-Wertes führt zu einer Verringerung der Thixotropie, so daß ein höherer Füllgrad erreicht werden kann und die Dispersion flüssiger und leichter formbar ist.

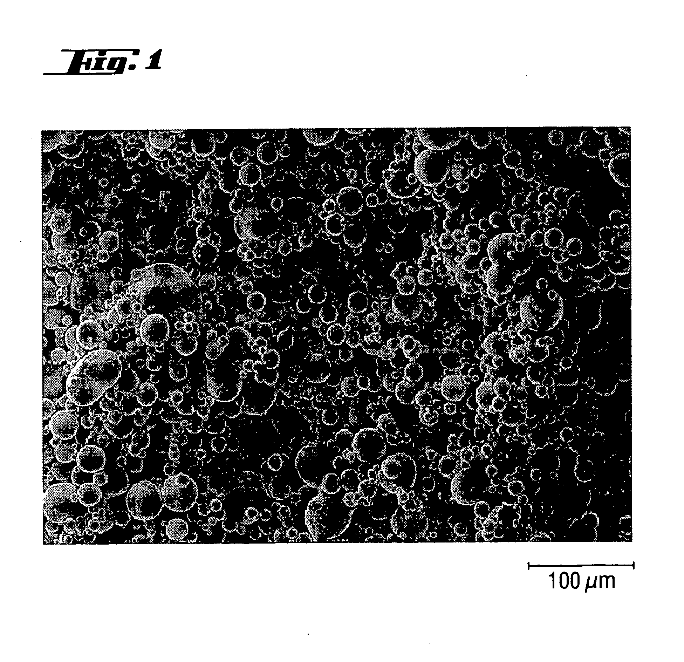

Die größeren amorphen SiO₂-Partikel haben vorzugsweise eine möglichst runde, d.h. kugelförmige und kompakte Morphologie, wie sie beispielsweise in Fig. 1 zu erkennen ist.

Die größeren amorphen SiO₂-Partikel weisen vorzugsweise eine Korngrößenverteilung mit einem D50-Wert zwischen 1-200 µm, bevorzugt zwischen 1-100 µm, besonders bevorzugt zwischen 10-50 µm und ganz besonders bevorzugt zwischen 10-30 µm auf. Ferner ist eine möglichst enge Partikelverteilung von Vorteil.

Bevorzugt sind amorphe SiO₂-Partikel mit einer BET-Oberfläche von 0,001 m²/g - 50 m²/g, besonders bevorzugt von 0,001 m²/g - 5m²/g, ganz besonders bevorzugt von 0,01 m²/g - 0,5 m²/g.

Die bimodale Korngrößenverteilungen erhält man durch Beimischung an amorphen SiO₂-Partikeln, wie z.B. Fused oder Fumed Silica mit einer Korngröße von 1-400 nm, bevorzugt 10 bis 200 nm, und besonders bevorzugt 50 bis 130 nm, in einer Menge von 0,1 bis 50 Gew.% bezogen auf den Gesammtfeststoffgehalt der Dispersion, besonders bevorzugt in einer Menge von 1 bis 30 Gew.%, ganz besonders bevorzugt in einer Menge von 1 bis 10 Gew.%.

Bevorzugt haben diese amorphen SiO₂-Partikel eine BET-Oberfläche zwischen 30 und 400 m²/g, besonders bevorzugt zwischen 130 und 300 m²/g.

Diese nanoskaligen amorphen SiO₂-Partikel fungieren dabei als eine Art anorganischer Binder zwischen den wesentlich größeren SiO₂-Partikeln, nicht aber als Füllmaterial um einen wesentlich höheren Füllgrad zu erreichen. Sie bewirken, daß bei der Herstellung von stabilen Formkörpern auf einen Wasserentzug im wesentlichen verzichtet werden kann. Ferner beeinflussen sie die viskosität bzw. das plastische Verhalten der Dispersion.

Die spezifische Dichte der amorphen SiO₂-Partikel sollte bevorzugt zwischen 1,0 und 2,2 g/cm³ liegen. Besonders bevorzugt haben die Partikel eine spezifische Dichte zwischen 1,8 und 2,2 g/cm³. Insbesondere bevorzugt haben die Partikel eine spezifische Dichte zwischen 2,0 und 2,2 g/cm³.

Bevorzugt sind ferner amorphe SiO₂-Partikel mit ≤ 3 OH-Gruppen pro nm² auf ihrer äußeren Oberfläche, besonders bevorzugt ≤ 2 OH-Gruppen pro nm², und ganz besonders bevorzugt ≤ 1 OH-Gruppen pro nm².

Die amorphen SiO₂-Partikel sollten vorzugsweise einen kristallinen Anteil von höchstens 1% aufweisen. Vorzugsweise sollten sie ferner eine möglichst geringe Wechselwirkung mit dem Dispersionsmittel zeigen.

Diese Eigenschaften haben amorphe SiO₂-Partikel unterschiedlicher Herkunft, wie z.B. nachgesinterte Kieselsäure (Fused Silica) sowie jede Art von amorphem gesinterten oder kompaktiertem SiO₂. Sie sind daher vorzugsweise zur Herstellung der erfindungsgemäßen Dispersion geeignet.

Entsprechendes Material läßt sich in an sich bekannter Art und Weise in der Knallgasflamme herstellen. Es ist auch käuflich erhältlich, z.B. unter der Bezeichnung Excelica® bei Tokoyama, Japan.

Wenn obige Kriterien erfüllt werden, können auch Partikel anderer Herkunft verwendet werden, wie z.B. Naturquarz, Quarzglassand, glasige Kieselsäure, zermahlene Quarzgläser bzw. gemahlener Quarzglasabfall sowie chemisch hergestelltes Kieselglas, wie z.B. gefällte Kieselsäure, hochdisperse Kieselsäure (Fumed Silica, hergestellt mittels Flammenpyrolyse), Xerogele, oder Aerogele.

Bei den größeren amorphen SiO₂-Partikeln handelt es sich bevorzugt um gefällte Kieselsäuren, hochdisperse Kieselsäuren, Fused Silica oder kompaktierte SiO₂-Partikel, besonders bevorzugt um hochdisperse Kieselsäure oder Fused Silica, ganz besonders bevorzugt um Fused Silica. Mischungen der genannten unterschiedlichen SiO₂-Partikel sind ebenfalls möglich und bevorzugt.

In einer besonderen Ausführungsform liegen die oben beschriebenen Partikel in hochreiner Form vor, d.h. mit einem Fremdatomanteil insbesondere an Metallen von ≤ 300 ppmw (parts per million per weight), bevorzugt ≤ 100 ppmw, besonders bevorzugt ≤ 10 ppmw und ganz besonders bevorzugt ≤ 1 ppmw.
In einer weiteren besonderen Ausführungsform können der Dispersion auch Zusatzstoffe wie z.B. Glasfaser, Glasbruch, Glaspartikel zugesetzt werden. Bevorzugt werden Kieselglasfasern zugesetzt.

In einer weiteren speziellen Ausführungsform kann die Dispersion zusätzlich Metallpartikel, Metallverbindungen oder Metallsalze enthalten. Bevorzugt sind dabei Verbindungen, die im Dispersionsmittel löslich sind, besonders bevorzugt sind wasserlösliche Metallsalze.

Die Zusatzstoffe Metallpartikel, Metallverbindungen oder Metallsalze können während und/oder nach der Herstellung der Dispersion zugesetzt werden.

Die Erfindung betrifft ferner ein Verfahren, das eine Herstellung der erfindungsgemäßen Dispersion auf sehr einfache Weise erlaubt. Das erfindungsgemäße Verfahren ist dadurch gekennzeichnet, daß amorphe SiO₂-Partikel mit runder und kompakter Form in ein vorgelegtes Dispersionsmittel eingearbeitet werden. Vorzugsweise sollte dabei die Ausbildung eines dilatanten Verhaltens weitgehend unterdrückt werden.

Dabei kann auf den Zusatz von Verflüssigern, insbesondere solchen mit organischen Komponenten gänzlich verzichtet werden.

Die Ausbildung eines dilatanten Verhaltens kann beispielsweise dadurch unterdrückt werden, daß die Zugabe der SiO₂-Partikel zu dem vorgelegten Dispersionsmittel langsam erfolgt und zu Beginn der Zugabe erst sehr langsam, später zum Ende hin schneller gerührt wird. Größere Scherkräfte sind aber über den ganzen Dispergierprozeß zu vermeiden, da Scherkräfte zu Abrieb am Dispersionsgerät führen und die Reibung zu einer Temperaturentwicklung und damit negativen Einfluß auf den Füllgrad hat.

Bei der Dispergierung wird das Dispersionsmittel vorgelegt und die SiO₂-Partikel langsam und bevorzugt stetig zugegeben. Die SiO₂-Partikel können aber auch in mehreren Schritten (portionsweise) zugegeben werden.

Über die Auswahl der SiO₂-Partikelgröße und Korngrößen läßt sich die Porengröße und Verteilung im aus der Dispersion hergestellten Formkörper gezielt einstellen.

Als Dispergiergeräte können alle dem Fachmann bekannten Geräte und Vorrichtungen verwendet werden. Bevorzugt sind ferner Geräte, die keine Metallteile enthalten, die mit der Dispersion in Berührung kommen könnten, um eine Metallkontamination durch Abrieb zu vermeiden.

Die Dispergierung sollte bei Temperaturen zwischen 0°C und 50°C, bevorzugt zwischen 5°C und 30°C erfolgen.

Vor und/oder während und/oder nach der Dispergierung können mittels dem Fachmann bekannter Methoden, wie z.B. Vakuum, die eventuell in der Dispersion enthaltenen Gase wie z.B. Luft entfernt werden. Bevorzugt wird dies während und/oder nach der vollständigen Dispergierung durchgeführt.

Eine so hergestellte stabile homogene Dispersion mit einem Feststoffgehalt von mindestens 80 Gew.%, bevorzugt 83 Gew.% und besonders bevorzugt 86 Gew.% ist für mindestens 2 h, bevorzugt für 30 min, besonders bevorzugt für mindestens 10 min gießfähig.

Darüber hinaus war die Aufgabe der vorliegenden Erfindung, ein einfaches, schnelles und billiges Verfahren bereit zu stellen, mit dem aus den erfindungsgemäßen Dispersionen poröse und amorphe SiO₂-Formkörper mit extrem hohen Füllgraden hergestellt werden können, das nicht die aus dem Stand der Technik bekannten Nachteile aufweist.

Diese Aufgabe wird gelöst durch ein Verfahren umfassend die Schritte
1) Herstellung einer Dispersion von SiO₂-Partikeln,
2) Überführen der Dispersion in eine Form,
3) Entformen des Formkörpers nach dem Erstarren der Dispersion,
4) Trocknung des Formkörpers,
dadurch gekennzeichnet, daß bei der Herstellung der Dispersion von SiO₂-Partikeln ein Füllgrad von mindestens 80 Gew.% an SiO₂-Partikeln erreicht wird.

Vor der Überführen der Dispersion in eine Form (Schritt 2) kann die Dispersion noch einer pH-Wert Änderung mittels mineralischer Säuren oder Basen unterzogen werden.

Bevorzugt sind als Säuren HCl, HF, H₃PO₄, H₂SO₄ oder Kieselsäure, sowie als Basen NH₃, NaOH und KOH. Besonders bevorzugt ist HCl, HF bzw. NH₃ und NaOH, ganz besonders bevorzugt HF und NH₃. Dabei sollte ein pH-Wert von 2-7 bzw. 7-11, vorzugsweise 3-5 bzw. 9-10 eingestellt werden.

Das Überführen der Dispersion in eine Form erfolgt in einer dem Fachmann bekannten Art und Weise, wie z.B. durch Gießen in eine Form.

Das Formen kann bei Temperaturen von 0°C bis zum Siedepunkt des Dispergiermittels durchgeführt werden. Bevorzugt sind Temperaturen zwischen 20°C und 30°C.

Als Formen eignen sich prinzipiell alle dem Fachmann bekannten Formen. Dabei können je nach gewünschtem Formkörper Formen mit und ohne Kern verwendet werden. Ferner können die Formen einund mehrteilig sein. Tiegelartige Formen sollten bevorzugt mindestens 1° konisch sein, um ein Entformen zu erleichtern.

Als Materialien eignen sich prinzipiell alle Materialien, wie sie üblicherweise auch in der Keramik verwendet werden. Bevorzugt sind dabei Materialien, die eine geringe Adhäsion zur Dispersion zeigen, wie z.B. Kunststoffe, Silicone, Glas, Kieselglas oder Graphit. Besonders bevorzugt sind Polyethylen (PE), Polypropylen (PP), Polytetrafluorethylen (PTFE), Polyamid, Siliconkautschuk und Graphit. Ganz besonders bevorzugt ist PTFE und Graphit.

Ferner können auch beschichtete Materialien, wie z.B. mit PTFE beschichtete Metalle verwendet werden.

Bevorzugt sollte die Form eine möglichst glatte Oberfläche, z.B. eine polierte Oberfläche haben.

Die Form kann porös oder nicht porös, gasdurchlässig oder gasundurchlässig sein. Bevorzugt ist eine gasdurchlässige Form. Ferner kann die Form elastisch oder unelastisch sein.

In einer besonderen Ausführungsform besteht die Form aus einer Folie bzw. einem Folienschlauch. Diese Art der Form eignet sich besonders zur Herstellung von Stangen und Rohren, wie in EP 318100 beschrieben.

Als Folie kann prinzipiell jede Arten von Folie verwendet werden. Bevorzugt sind Folien aus Materialien wie z.B. PE, PP, PET, PTFE, Cellulose, faserfliesverstärkte Cellulose oder Polyamid.

In einer besonderen Ausführungsform entzieht die Form der Dispersion einen Teil des Dispergiermittels. Hierbei können alle dem Fachmann bekannten Arten des Schlickergusses durchgeführt werden, wie z.B. in DE OS 2218766 beschrieben. Dadurch kann der Füllgrad des Formteiles während der Formgebung auf bis zu 95 Gew.% erhöht werden.

Darüber hinaus kann ein rotationssymmetrischer Formkörper auch mittels dem Fachmann bekannter Methoden der Formgebung, wie z.B. Eindrehverfahren, Rollerverfahren oder Schleudergußverfahren, erhalten werden.

Auch dem Fachmann aus der Keramik bekannte Druckgußverfahren können eingesetzt werden.

Weiterhin kann ein Formkörper auch außen und/oder innen an einem vorgegebene Formkörper geformt werden. Dabei können alle dem Fachmann bekannten Methoden verwendet werden, wie z.B. in der EP 473104 beschrieben. Dadurch sind z.B. Kieselglasrohre oder Stangen mit porösen Innen- und/oder Außenbereichen darstellbar. Ferner können auf diese Weise auch Formkörper bestehend aus unterschiedlichen Schichten hergestellt werden.

In Schritt 3) wird die erstarrte Dispersion als formstabiler Formkörper entformt. Das Erstarren der Dispersion ist zeitlich abhängig vom Füllgrad, der Partikelverteilung, der Temperatur und dem pH-Wert der Dispersion. Bevorzugte Temperaturen zum Erstarren sind Temperaturen zwischen -196°C und dem Siedepunkt des Dispergiermediums, bevorzugt sind Temperaturen zwischen -76°C und 50°C, besonders bevorzugt zwischen -20°C und 30°C und ganz besonders bevorzugt zwischen 0°C und 30°C.

In der Regel erfolgt ein Erstarren zu einem formstabilen Formkörper innerhalb von einer Minute bis 24 Stunden, bevorzugt sind Zeiten zwischen einer Minute und 6 Stunden, besonders bevorzugt sind Zeiten zwischen einer Minute und 30 Minuten.

Beim Erstarren der Dispersion zu einem formstabilen Formkörper tritt kein merklicher Schrumpf auf. Bevorzugt ist ein linearer Schrumpf zwischen 0 und 0,5%.

Wenn ein kleiner Teil des Dispergiermittels aus der Form durch Verdunstung entweichen kann, beschleunigt dies das Erstarren der Dispersion.

Damit der Formkörper sich besser zerstörungsfrei und rißfrei aus der Form entnehmen läßt, kann vor dem Befüllen mit der erfindungsgemäßen Dispersion die Form mit einem dem Fachmann bekannten geeigneten Formtrennmittel versehen werden. Ein bevorzugtes Formtrennmittel ist z.B. Graphit.

Die eigentliche Entformung erfolgt nach der dem Fachmann bekannten Art und Weise.

Weiterhin ist auch eine Entformung durch Bildung einer Wasserschicht zwischen Formkörper und Form möglich, die z.B. über das Anlegen einer Spannung generiert wurde. Dabei sind alle dem Fachmann bekannten Methoden möglich, wie sie z.B. in US 5578101 beschrieben werden.

In Schritt 4) erfolgt das Trocknen des aus Schritt 3) erhaltenen Formkörpers. Das Trocknen erfolgt dabei mittels dem Fachmann bekannter Methoden wie z.B. Vakuumtrocknung, Trocknung mittels heißer Gase wie z.B. Stickstoff oder Luft oder Kontakttrocknung. Auch eine Kombination der einzelnen Trocknungsmethoden ist möglich. Bevorzugt ist eine Trocknung mittels heißer Gase.

Bevorzugt ist ferner eine Trocknung mittels Mikrowelle bzw. Infrarotstrahlung.

Prinzipiell ist es erfindungsgemäß natürlich ebenso möglich, die Schritte 3) und 4) in geänderter Reihenfolge durchzuführen.

Das Trocknen erfolgt bei Temperaturen im Formkörper zwischen 25°C und dem Siedepunktes des Dispergiermittels in den Poren des Formkörpers.

Die Trockenzeiten sind abhängig vom zu trocknenden Volumen des Formkörpers, der maximalen Schichtdicke, dem Dispergiermittel und der Porenstruktur des Formkörpers.

Beim Trocknen des Formkörpers tritt ein geringer Schrumpf auf. Der Schrumpf ist abhängig vom Füllgrad des feuchten Formkörpers. Bei einem Füllgrad von 80 Gew.% ist der Volumenschrumpf ≤ 2,5% und der lineare Schrumpf ≤ 0,8%. Bei höherem Füllgrad ist der Schrumpf geringer.

In einer besonderen Ausführungsform, bei der in allen Schritten mit hochreinen Materialien gearbeitet wird, weist der Formkörper einen Fremdatomanteil insbesondere an Metallen von ≤ 300 ppmw, bevorzugt ≤ 100 ppmw, besonders bevorzugt ≤ 10 ppmw und ganz besonders bevorzugt ≤ 1 ppmw auf.

Bei dem auf diese Weise erhältlichen Formkörper handelt es sich um einen amorphen, offenporigen, endkonturnahen SiO₂-Formkörper beliebiger Dimensionen und Gestalt.

Der so erhältliche Formkörper hat eine geringere Anisotropie bezüglich der Dichte als nach dem Stand der Technik erhältliche Formkörper.

Diese Formkörper sind dadurch gekennzeichnet, daß sie zu mindestens 64 Vol.%, bevorzugt zu mindestens 70 Vol.% aus SiO₂-Partikeln bestehen und ein Porenvolumen (bestimmt mittels Quecksilberporosimetrie) von 1 ml/g bis 0,01 ml/g, vorzugsweise 0,8 ml/g bis 0,1 ml/g, besonders bevorzugt von 0,4 ml/g bis 0,1 ml/g haben
und Poren mit einem Porendurchmesser von 1 bis 10 µm, vorzugsweise 3 bis 6 µm, besitzen, die bis 1000°C sinterstabil sind oder Poren mit einer bimodalen Porendurchmesserverteilung haben, wobei ein Maximum der Porendurchmesser im Bereich von 0,01 bis 0,05 µm, vorzugsweise 0,018 bis 0,022 µm, liegt und ein zweites Maximum der Porendurchmesser im Bereich von 1 bis 5 µm, vorzugsweise 1,8 bis 2,2 µm, liegt.

Erfindungsgemäße Formkörper können ferner Poren mit einer bimodalen Porendurchmesserverteilung haben, wobei ein Maximum der Porendurchmesser im Bereich von 0,01 bis 0,05 µm, vorzugsweise 0,018 bis 0,022 µm, liegt und ein zweites Maximum der Porendurchmesser im Bereich von 1 bis 5 µm, vorzugsweise 1,8 bis 2,2 µm, liegt, wobei sich die Porendurchmesserverteilung beim Erhitzen derart verändert, daß bei 1000°C eine monomodale Porendurchmesserverteilung vorliegt und der Porendurchmesser im Bereich von 2,2 bis 5,5 µm, vorzugsweise 3,5 bis 4,5 µm, liegt und die innere Oberfläche des Formkörpers 100 m²/g bis 0,1 m²/g, vorzugsweise 50 m²/g bis 0,1 m²/g, beträgt.

Vorzugsweise sind die erfindungsgemäßen Formkörper bis 1000°C bezüglich ihres Volumens sinterstabil.

Der Einsatz größerer Partikel in der Dispersion bewirkt größere Poren im Formkörper und eine enge Partikelgrößenverteilung in der Dispersion bewirkt eine enge Porengrößenverteilung im Formkörper bewirkt.

Der Zusatz von geringen Mengen (in etwa 1 bis 4 Gew.%) an Partikeln im Nanometerbereich hat keinen nennenswerten Einfluß auf die monomodale Porengrößenverteilung mit Porengrößen im unteren Mycrometerbereich im Formkörper.

Der Zusatz von größeren Mengen (in etwa 5 bis 50 Gew.%) an Partikeln im Nanometerbereich bewirkt eine bimodale Porengrößenverteilung im Formkörper, der neben den genannten Poren auch Poren im unteren Nanometerbereich enthält.

In allen Fällen ändert sich der Gesamtfüllgrad des Formkörpers nicht.

Die Dichte des erfindungsgemäßen Formkörpers liegt zwischen 1,4 g/ cm³ und 1,8 g/cm³.

Die beschriebenen Formkörper mit monomodaler Porenverteilung sind bis 1000°C für mindestens 24h sinterstabil. Ferner sind sie thermisch stabil und weisen einen sehr geringen thermischen Ausdehnungsfaktor auf.

Die erfindungsgemäßen Formkörper weisen vorzugsweise eine Biegefestigkeit zwischen 0,1 N/mm² und 20 N/mm² auf, besonders bevorzugt zwischen 0,5 und 10 N/mm², insbesondere bevorzugt zwischen 0,8 und 10 N/mm². Damit zeigen diese Formkörper eine höhere Biegefestigkeit als Grünkörper mit monomodaler Korngrößenverteilung wie sie aus dem Stand der Technik bekannt sind. Ferner kann durch Wärmebehandlung eine erhöhte Biegefestigkeit erreicht werden.

Die beschriebenen Formkörper können aufgrund ihrer besonderen Eigenschaften vielfältig verwendet werden, z.B. als Filtermaterialien, Wärmedämmmaterialien, Hitzeschilder, Katalysatorträgermaterialien sowie als "preform" für Glasfasern, Lichtleitfasern, optische Gläser oder Quarzgüter aller Art dienen.

In einer weiteren speziellen Ausführungsform können die porösen Formkörper mit unterschiedlichsten Molekülen, Stoffen und Substanzen ganz oder teilweise versetzt werden. Bevorzugt sind Moleküle, Stoffe und Substanzen, die katalytisch aktiv sind. Dabei können alle dem Fachmann bekannten Methoden angewendet werden, wie sie z.B. in US 5655046 beschrieben sind.

In einer weiteren speziellen Ausführungsform weist der offenporige Grünkörper Poren im oberen Nanometer- bis unteren Mycrometerbereich auf, bevorzugt im Bereich von 0 bis 10 µm. Dies ermöglicht erst eine rasche Vakuumsinterung, da man sich bei der nicht im Knudsen-Bereich befindet.

In einer weiteren speziellen Ausführungsform weist der offenporige Grünkörper Poren mit einer bimodalen Verteilung im unteren Nanometer- bis unteren Mycrometerbereich auf, bevorzugt im Bereich von 1 bis 20 nm und 1 bis 10 µm.

In einer speziellen Ausführungsform können die so erhaltenen Formkörper noch einer Sinterung unterzogen werden. Dabei können alle dem Fachmann bekannten Methoden, wie z.B. Vakuumsintern, Zonensintern, Sintern im Lichtbogen, Sintern mittels Plasma oder Laser, induktives Sintern oder Sintern in einer Gasatmosphäre bzw. Gasstrom verwendet werden. Bevorzugt ist eine Sinterung im Vakuum oder einem Gasstrom. Besonders bevorzugt ist eine Sinterung im Vakuum mit Drücken zwischen 10-5 mbar und 10-3 mbar.

Die zur Sinterung notwendigen Temperaturen liegen zwischen 1400°C und 1700°C, bevorzugt zwischen 1500°C und 1650°C.

Der Formkörper kann dabei frei stehend, liegend oder hängend sowie mit jeder dem Fachmann bekannten Methode abgestützt gesintert werden. Ferner ist auch eine Sinterung in einer sinterstabilen Form möglich. Bevorzugt sind hierbei Formen aus Materialien, die nicht zu einer nachträglichen Verunreinigung des Sintergutes führen. Besonders bevorzugt sind Formen aus Graphit und/ oder Siliciumcarbid und/oder Siliciumnitrid . Handelt es sich bei den zu sinternden Formkörpern um Tiegel, so ist auch eine Sinterung auf einem Dorn, bestehend z.B. aus Graphit möglich, wie z.B. in der DE 2218766 beschrieben.

Ferner können die Formkörper auch in speziellen Atmosphären wie z.B. He, SiF₄ gesintert werden, um eine Nachreinigung und/oder eine Anreicherung bestimmter Atome und Moleküle im Sintergut zu erreichen. Dabei können alle dem Fachmann bekannten Methoden, wie z.B. in US 4979971 beschrieben, verwendet werden.

Ferner können zur Nachreinigung auch Methoden verwendet werden, wie sie z.B. in EP 199787 beschrieben sind.

Bevorzugte Substanzen zur Nachreinigung sind dabei solche, die mit den Verunreinigungen leicht flüchtige Verbindungen, wie z.B. Metallhalogenide bilden. Bevorzugte Substanzen sind reaktive Gase, wie z.B. Cl₂ oder HCl, sowie leicht zersetzbare Stoffe wie z.B. Thionylchlorid. Besonders bevorzugt ist der Einsatz von Thionylchlorid oberhalb der Zersetzungstemperatur.

Auf diese Weise läßt sich ein 100% amorpher (kein Cristobalit), transparenter, gasundurchlässiger gesinterter Kieselglasformkörper mit einer Dichte von mindestens 2,15 g/cm³, vorzugsweise 2,2 g/cm³, herstellen.

In einer besonderen Ausführungsform weist der gesinterte Kieselglasformkörper keine Gaseinschlüsse und vorzugsweise eine OH-Gruppen Konzentration von ≤ 1 ppm auf.

In einer besonderen Ausführungsform, bei der in allen Schritten mit hochreinen Materialien gearbeitet wird, weist der gesinterte Formkörper einen Fremdatomanteil insbesondere an Metallen von ≤ 300 ppmw, bevorzugt ≤ 100 ppmw, besonders bevorzugt ≤ 10 ppmw und ganz besonders bevorzugt ≤ 1ppmw auf.

Die so hergestellten Kieselglasformkörper eignen sich prinzipiell für alle Anwendungen, in denen Kieselglas verwendet wird. Bevorzugte Anwendungsfelder sind Quarzgüter aller Art, Glasfasern, Lichtleitfasern und optische Gläser.

Ein besonders bevorzugtes Anwendungsgebiet sind hochreine Kieselglastiegel für das Ziehen von Siliziumeinkristallen.

In einer weiteren besonderen Ausführungsform können die Dispersionen und/oder die porösen Formkörper und/oder die gesinterten Kieselglaskörper mit Molekülen, Stoffen und Substanzen versetzt sein, die den jeweiligen Formkörpern zusätzliche Eigenschaften vermitteln.

Zum Beispiel verändert eine Beimischung von Siliciumpartikeln und/oder Aluminiumoxid und/oder Titanoxid wie in US 4033780 und US 4047966 beschrieben die optischen Eigenschaften der gesinterten Formkörper durch Reduzierung der SiOH Gruppen sowie des Wassergehaltes. Ferner wird durch die Siliciumpartikel der Sauerstoffgehalt im gesinterten Formkörper reduziert.
Darüber hinaus kann die Formstabilität während der Sinterung bzw. bei thermischer Belastung des gesinterten Formkörpers erhöht bzw. beeinflußt werden.
In einer weiteren besonderen Ausführungsform wird die Dispersion und/oder der poröse Formkörper ganz oder teilweise mit Verbindungen versetzt, die eine Cristobalitbildung fördern oder bewirken. Dabei können alle dem Fachmann bekannten Verbindungen verwendet werden, die eine Cristobalitbildung fördern und/oder bewirken, wie z.B. in EP 0753605, US 5053359 oder GB 1428788 beschrieben. Bevorzugt sind hierbei BaOH und/oder Aluminumverbindungen.

Ferner kann, wie in US 4018615 beschrieben, eine Cristobalitbildung ganz oder teilweise erreicht werden, wenn kristalline SiO₂ Partikel der Dispersion und/oder dem porösen Formkörper zugesetzt werden. Die kristallinen Partikel sollten dabei die Partikelgrößen aufweisen, wie sie weiter vorne für die amorphen Partikel beschrieben wurden.

Nach dem Sintern eines solchen Formkörpers erhält man Formkörper, die eine Cristobalitschicht innen und/oder außen besitzen oder ganz aus Cristobalit bestehen. Handelt es sich bei den gesinterten Formkörpern insbesondere um Tiegel zum Kristallziehen von Si-Einkristallen, eignen sich diese besonders zum Kristallziehen, da sie temperaturstabiler sind und z. B. eine Siliziumschmelze weniger stark verunreinigen. Dadurch kann eine höhere Ausbeute beim Kristallziehen erreicht werden.
Eine Reduzierung der Migration von Verunreinigungen während des Einkristallziehens kann auch durch die Anwesenheit von Aluminium oder Aluminium enthaltenden Stoffen im Ziehtiegel, wie in DE 19710672 beschrieben, erreicht werden. Dies kann durch Zugabe von entsprechenden Partikeln oder gelösten Substanzen zu der Dispersion und/oder dem porösen Formkörper erreicht werden.

Die folgenden Beispiele und Vergleichsbeispiele dienen der weiteren Erläuterung der Erfindung.

### Beispiel 1:

In einem 600 ml Kunststoffbecher wurden 170 g bidest. H₂O vorgelegt. Mit einem handelsüblichen Propellerrührer wurden zunächst 45 g Fumed Silica (Aerosil® OX 50 der Firma Degussa, BET Oberfläche 50 m²/g) in 15 min eingerührt. Anschließend wurden 845 g Fused Silica (Excelica® SE-15 der Firma Tokuyama, mittlere Teilchengröße 15 µm) erst zügig, zum Schluß in kleineren Portionen zugegeben und in wenigen Minuten dispergiert. Die Umdrehungsgeschwindigkeit des Rührers wurde dabei von anfangs 400 U/min. nach und nach auf 2000 U/min. erhöht.

Im Anschluß an die vollständige Dispergierung wurde die Dispersion 10 Minuten einem leichten Unterdruck (0,8 bar) unterzogen, um eventuelle eingeschlossene Luftblasen zu entfernen.

Die so hergestellte Dispersion bestand aus 890 g Feststoff, was einem Feststoffgehalt von 83,96 Gew.% entspricht (davon wiederum 94,94% Fused Silica und 5,06% Fumed Silica).

Ein Teil der Dispersion wurde in zwei oben offene rechteckige Formen aus PTFE (5cm*15cm*2cm) gegossen. Nach 4 Stunden wurden die beiden Formkörper durch Zerlegen der Form entformt und in einem Trockenschrank bei 200°C getrocknet. Die getrockneten Formkörper hatten eine Dichte von 1,62g/cm³.

Mittels Quecksilberporosimetrie wurde ein Porenvolumen von 0,20 ml/g und eine innere Oberfläche von 30 m²/g bestimmt.

Ein Formkörper wurde in einem Hochvakuum (10⁻⁵ mbar) gesintert, indem er für eine Minute auf 1620°C mit einer Aufheizrate von 2°C/min erhitzt wurde.

Der so erhaltene gesinterte Formkörper hatte eine Dichte von 2,2 g/cm³, bestand aus 100 % amorphem, transparenten, gasundurchlässigen Kieselglas ohne Gaseinschlüsse und einem OH-Gruppen Gehalt unterhalb von 1 (quantitative Bestimmung mittels IR- Spektroskopie in Transmission).

Der meßbare Schrumpf gegenüber dem porösen Formkörper betrug bezogen auf das Volumen 26,37 %, was einem linearen Schrumpf von 10 % entspricht.

Der zweite Formkörper wurde ebenfalls in einem Hochvakuum (10⁻⁵ mbar) bis auf 1620°C mit einer Aufheizrate von 2°C/min erhitzt. Bei den erreichten Temperaturen von 400°C, 600°C, 800°C, 1000°C, 1200°C, 1400°C, 1600°C wurde jeweils die Dichte des Formkörpers bestimmt. Die derart bestimmte Dichte des Formkörpers in Abhängigkeit von der Sintertemperatur zeigt Tabelle 1.

**Tabelle 1:**

| **Dichte des Formkörpers in Abhängigkeit der Sinter-temperatur.** | |
|---|---|
| Temperatur [°C] | Dichte [g/cm³] |
| 200 | 1,62 |
| 400 | 1,61 |
| 600 | 1,63 |
| 800 | 1,62 |
| 1000 | 1,63 |
| 1200 | 1,68 |
| 1400 | 1,81 |
| 1600 | 2,20 |

Figur 1 zeigt eine REM Aufnahme des bei 200°C getrockneten Formkörpers.

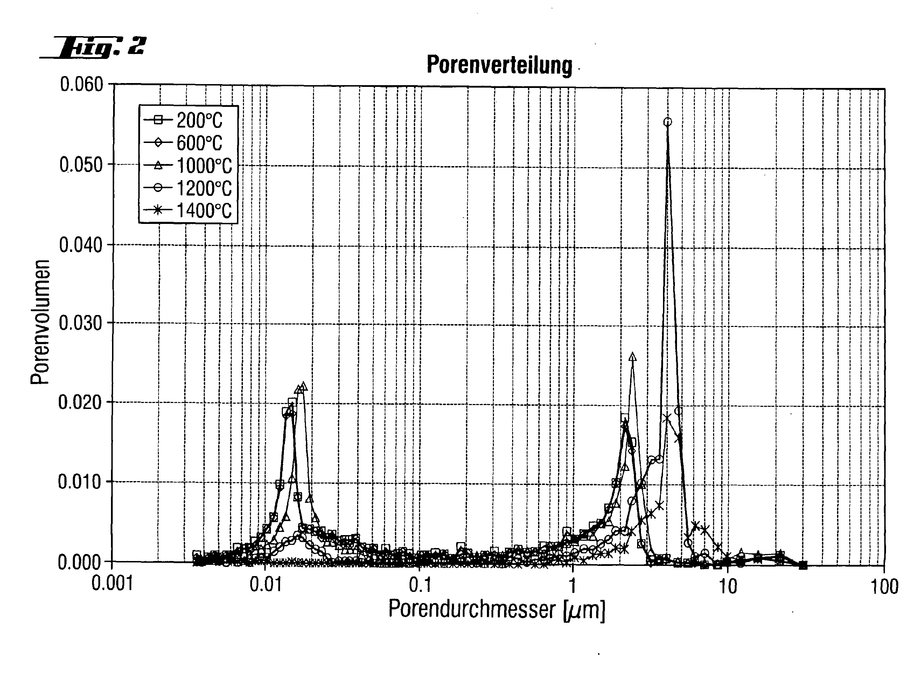

Ferner wurde bei den erreichten Temperaturen von 200°C, 600°C, 1000°C, 1200°C und 1400°C jeweils die Porenverteilung des Formkörpers mittels Quecksilberporosimetrie bestimmt. Diese Porenverteilung ist in Fig. 2 wiedergegeben.

Ferner wurden von den Proben bei den genannten Temperaturen das Porenvolumen und die innere Porenoberfläche bestimmt. Das Ergebnis ist in Tabelle 2 wiedergegeben.

**Tabelle 2:**

| **Porenvolumen und innere Porenoberfläche (mittels Quecksilberporosimetrie)** | | |
|---|---|---|
| Probe | Porenvolumen [ml/g] | Inneren Oberfläche [m²/g] |
| 200°C | 0,24 | 33,23 |
| 600°C | 0,22 | 33,068 |
| 1000°C | 0,21 | 27,78 |
| 1200°C | 0,18 | 8,217 |
| 1400°C | 0,097 | 2,01 |

### Beispiel 2a bis c:

a) (Vergleichsbeispiel) In einem 600 ml Kunststoffbecher wurden 170 g bidest. H₂O vorgelegt. Mit einem handelsüblichen Propellerrührer wurden 890 g Fused Silica (Excelica® SE-15 der Firma Tokuyama, mittlere Teilchengröße 15 µm) erst zügig, zum Schluß in kleineren Portionen zugegeben und in wenigen Minuten dispergiert.
b) In einem 600 ml Kunststoffbecher wurden 170 g bidest. H₂O vorgelegt. Mit einem handelsüblichen Propellerrührer wurden zunächst 45 g Fumed Silica (Aerosil® OX 50 der Firma Degussa, BET Oberfläche 50 m²/g) in 15 min eingerührt. Anschließend wurden 845 g Fused Silica (Excelica® SE-15 der Firma Tokuyama, mittlere Teilchengröße 15 µm) erst zügig, zum Schluß in kleineren Portionen zugegeben und in wenigen Minuten dispergiert.
c) In einem 600 ml Kunststoffbecher wurden 170 g bidest. H₂O vorgelegt. Mit einem handelsüblichen Propellerrührer wurden zunächst 90 g Fumed Silica (Aerosil® OX 50 der Firma Degussa, BET Oberfläche 50 m²/g) in 15 min eingerührt. Anschließend wurden 800 g Fused Silica (Excelica® SE-15 der Firma Tokuyama, mittlere Teilchengröße 15 µm) erst zügig, zum Schluß in kleineren Portionen zugegeben und in wenigen Minuten dispergiert.

In allen drei Varianten betrug die Umdrehungsgeschwindigkeit des Rührers anfangs 400 U/min. und wurde nach und nach auf 2000 U/min. erhöht.
Im Anschluß an die vollständige Dispergierung wurden alle drei Dispersionen 10 Minuten einem leichten Unterdruck (0,8 bar) unterzogen, um eventuelle eingeschlossene Luftblasen zu entfernen.
Die so hergestellten Dispersionen bestanden aus 890 g Feststoff, was einem Feststoffgehalt von 83,96 Gew.% entspricht. Der Anteil an Fumed Silica betrug in Dispersion a) 0 Gew.%, in b) 5,06 Gew.% und in c) 10,12 Gew.%.

Die Dispersionen wurden jeweils in 10 oben offene rechteckige Formen aus PTFE (5cm*10cm*2cm) gegossen. Nach 4 Stunden wurden die Formkörper durch Zerlegen der Form entformt und in einem Trockenschrank bei 200°C getrocknet. Nach dem Trocknen wurde ein Teil der Proben noch jeweils bei 800°C und 1100°C für eine Stunde getempert.

Anschließend wurde die Biegefestigkeit mittels 3 Punkt Biegemessung ermittelt.

**Tabelle 3:**

| **Biegefestigkeit (N/mm**^{**2**}**) in Abhängigkeit des Anteils an nanoskaligen amorphen SiO**_{**2**}**-Partikeln und Wärmebehandlung (1Stunde)** | | | |
|---|---|---|---|
| | Wärmebehandlung | | |
| | 200 °C | 800°C | 1100°C |
| 0% nanoskalige Partikel (siehe Beispiel 2a) | 0,2 N/mm² | 1,2 N/mm² | 1,6 N/mm² |
| 5% nanoskalige Partikel (siehe Beispiel 2b) | 0,8 N/mm² | 1,9 N/mm² | 4,2 N/mm² |
| 10% nanoskalige Partikel (siehe Beispiel 2c) | 0,8 N/mm² | 1,7 N/mm² | 3,9 N/mm² |

Wie aus Tab. 3 ersichtlich führt eine bimodale Korngrößenverteilung zu einer erhöhten Biegefestigkeit. Vergleicht man die Festigkeit der Formkörper aus Tab. 3 mit den Festigkeiten, die in der JP 5-294610 angegeben sind (bei 300°C getrocknete Proben), so ergibt sich bei vergleichbarem pH Wert der Dispersion von ca. 6,5 aus dem Stand der Technik eine Festigkeit von 0,01 N/mm², während die Festigkeit nach dem erfindungsgemäßen Verfahren (Beispiel 2b, 2c) bei bis zu 0,8 N/mm² liegt, was einem Faktor von bis zu 80 entspricht.

### Vergleichsbeispiel 1:

In Anlehnung an EP 653381 wurde Siliziumdioxid in einer Kugelmühle gemahlen, bis eine Kornverteilung im Bereich von >0,45 µm bis <50 µm vorlag, wobei der Hauptanteil von etwa 60 % zwischen 1 µm und 10 µm lag. Bei dem Versuch, wie im Beispiel 1 eine Dispersion mit einem Feststoffanteil von ≥ 80Gew.% herzustellen, wurde die Dispersion bei 79 Gew.% Feststoffanteil schlagartig fest. Eine Überführung der Masse in eine Form war nicht mehr möglich.

### Vergleichsbeispiel 2:

In Anlehnung an EP 318100 wurde versucht, eine pyrogene Kieselsäure mit einer BET Oberfläche von 50 m²/g in Wasser zu dispergieren. Bei dem Versuch, wie im Beispiel 1 eine Dispersion mit einem Feststoffanteil von ≥ 80 Gew.% herzustellen, wurde die Dispersion schon bei 42 Gew.% Feststoffanteil schlagartig fest. Eine Überführung der Masse in eine Form war nicht mehr möglich. Auch mit Verwendung von Ammoniumfluorid als Verflüssiger konnte nur ein Feststoffanteil von 48 Gew.% dispergiert werden. Eine Überführung der Masse in eine Form war wiederum nicht möglich.

## Patentansprüche

1. Amorpher, offenporiger, endkonturnaher SiO₂-Formkörper **dadurch gekennzeichnet, daß** er zu mindestens 64 Vol.% aus runden SiO₂-Partikeln, die eine bimodale Korngrößenverteilung aufweisen, besteht und ein Porenvolumen (bestimmt mittels Quecksilberporosimetrie) von 1 ml/g bis 0,01 ml/g hat und Poren mit einem Porendurchmesser von 1 bis 10 µm besitzt, die bis 1000°C sinterstabil sind oder
Poren mit einer bimodalen Porendurchmesserverteilung hat, wobei ein Maximum der Porendurchmesser im Bereich von 0,01 bis 0,05 µm liegt und ein zweites Maximum der Porendurchmesser im Bereich von 1 bis 5 µm liegt.

2. Amorpher, offenporiger, endkonturnaher SiO₂-Formkörper gemäß Anspruch 1 **dadurch gekennzeichnet, daß** die runden SiO₂ Partikel eine bimodale Korngrößenverteilung aufweisen und der Poren mit einer bimodalen Porendurchmesserverteilung hat, wobei ein Maximum der Porendurchmesser im Bereich von 0,01 bis 0,05 µm liegt und ein zweites Maximum der Porendurchmesser im Bereich von 1 bis 5 µm liegt, wobei sich die Porendurchmesserverteilung beim Erhitzen derart verändert, daß bei 1000°C eine monomodale Porendurchmesserverteilung vorliegt und der Porendurchmesser im Bereich von 2,2 bis 5,5 µm liegt und die innere Oberfläche des Formkörpers 100 m²/g bis 0,1 m²/g beträgt.

3. SiO₂-Formkörper nach einem der Ansprüche 1 oder 2, **dadurch gekennzeichnet, daß** die SiO₂ Partikel eine bimodale Korngrößenverteilung auf weisen und er bezüglich seines Volumens bis 1000°C sinterstabil ist.
